# EUROPÄISCHE PATENTSCHRIFT

(11) **EP 3 219 533 B1**
(45) Veröffentlichungstag und Bekanntmachung des Hinweises auf die Patenterteilung: **29.01.2020**
(21) Anmeldenummer: 17157128.4
(22) Anmeldetag: 21.02.2017
(51) Int. Cl.: B60K 35/00, B62D 15/02, B60R 1/00

(54) **SICHTSYSTEM FÜR EIN FAHRZEUG, INSBESONDERE NUTZFAHRZEUG**
VIEWING SYSTEM FOR A MOTOR VEHICLE, IN PARTICULAR A COMMERCIAL VEHICLE
SYSTÈME DE VISION POUR UN VÉHICULE, NOTAMMENT POUR UN VÉHICULE UTILITAIRE

(30) Priorität: 16.03.2016 DE 102016003233
(43) Veröffentlichungstag der Anmeldung: 20.09.2017
(73) Patentinhaber: MEKRA Lang GmbH & Co. KG, 91465 Ergersheim (DE)
(72) Erfinder: Lang, Werner, 91465 Ergersheim (DE); Schinzer, Stefan, 59590 Geseke (DE)
(74) Vertreter: Kramer Barske Schmidtchen Patentanwälte PartG mbB

(56) Entgegenhaltungen:
- WO-A1-2011/135671
- DE-A1-102005 045 196
- DE-A1-102010 026 222
- DE-A1-102011 083 184
- US-A1- 2014 148 971

## Beschreibung

Die Erfindung betrifft ein Sichtsystem für ein Fahrzeug, insbesondere ein Nutzfahrzeug, mithilfe dessen Bilder von der Fahrzeugumgebung zusammen mit Information über einen zukünftigen Fahrverlauf des Fahrzeugs in einem Fahrzeuginnenraum, beispielsweise einem Fahrerraum eines Nutzfahrzeugs, dargestellt werden können, so dass sie durch den Fahrer während der Fahrt einsehbar sind.

Solche Sichtsysteme dienen unter anderem als Spiegelersatzsysteme oder sie werden zusätzlich zu den Spiegeln, insbesondere Rückspiegeln und Außenspiegeln, eines Fahrzeugs verwendet, um dem Fahrer die Situation rund um das Fahrzeug in bestimmten Fahrsituationen bestmöglich ergonomisch darzustellen zur Fahrerunterstützung beim Fahren und/oder vorwärts bzw. rückwärts Rangieren des Fahrzeugs.

Damit tragen solche Sichtsysteme dazu bei, die Verkehrssicherheit zu verbessern, indem der Fahrer des Fahrzeugs bei bestimmten Fahrsituationen unterstützt wird, um mögliche Kollisionen mit anderen Objekten im Straßenverkehr zu verhindern.

### Stand der Technik

Spiegelersatzsysteme und andere Kameramonitorsysteme bzw. Anzeigeeinrichtungen für Fahrzeuge sind im Stand der Technik bekannt.

WO 2011/135671 A1 offenbart eine Einparkunterstützungsvorrichtung, bei der auf einer Anzeige ein Bild eines Bereichs hinter einem Fahrzeug einem Fahrer angezeigt wird, um diesen bei einem Rückwärtseinparkvorgang zu unterstützen.

DE 10 2011 083 184 A1 betrifft eine Einparkunterstützungseinrichtung zum Unterstützen eines Fahrers, wenn der Fahrer ein Fahrzeug in eine Parklücke zurücksetzt.

US 2014/0148971 A1 betrifft eine Parkunterstützungsvorrichtung, die eine Trajektorie eines Fahrzeugs anzeigt.

DE 10 2010 026 222 A1 betrifft ein Verfahren zur Fahrunterstützung beim Fahren und/oder Rangieren eines Fahrzeugs, bei dem Umgebungsbereiche des Fahrzeugs erfasst werden und Orientierungshilfen in Abhängigkeit von den erfassten Umgebungsbereichen zumindest optisch ausgegeben werden.

Die DE 10 2010 026 222 A1 beschreibt beispielsweise eine Vorrichtung zur Fahrerunterstützung beim Fahren und/oder Rangieren eines Fahrzeugs, wobei ein Bereich hinter einem Fahrzeug erfasst wird und Orientierungshilfen in Abhängigkeit von den erfassten Umgebungsbereichen optisch ausgegeben wird. Durch das Überlagern der Orientierungshilfen mit ausgegebenen Bildern einer Bilderfassungseinheit kann der Fahrer des Fahrzeugs beim rückwärts Rangieren des Fahrzeugs unterstützt werden, um so eine Kollisionsgefahr mit Hindernissen und anderen Verkehrsteilnehmern zu vermeiden.

Die in der DE 10 2010 026 222 A1 beschriebene Vorrichtung zur Fahrerunterstützung ist jedoch ungeeignet für ein Fahrzeug, das eine Zugmaschine und einen Anhänger aufweist. Die obengenannte bekannte Vorrichtung zur Fahrerunterstützung hat ferner den Nachteil, dass der Fahrer des Fahrzeugs irritiert und unnötig abgelenkt wird, da eine Vielzahl von statischen Hilfslinien und Distanzlinien als Orientierungshilfe in ein Bild eingeblendet werden, das den hinteren Bereich des Fahrzeugs zeigt.

### Aufgabe der Erfindung

Es ist eine Aufgabe der Erfindung ein Sichtsystem für ein Fahrzeug, insbesondere ein Nutzfahrzeug, bereitzustellen, das solche störenden oder irritierenden Einflüsse für den Fahrer auf dem darzustellenden Bild vermindern oder ausschließen kann.

### Darstellung der Erfindung

Diese Aufgabe wird durch ein Sichtsystem mit den Merkmalen des Anspruchs 1 gelöst. Bevorzugte Weiterentwicklungen sind in den abhängigen Ansprüchen angegeben.

Der Erfindung liegt der Gedanke zugrunde, den Fahrer eines Fahrzeugs bei bestimmten Fahrsituationen, beispielsweise bei einem Rückwärtsrangieren bzw. -einparken oder einer Kurvenfahrt zu unterstützen, indem auf einer für den Fahrer des Fahrzeugs einsehbaren Bildwiedergabeeinheit in ein Bild, das einen von einer Aufnahmeeinheit aufgenommenen Sichtbereich der Umgebung des Fahrzeugs zeigt, mindestens eine Trajektorie (Bahnkurve) über einen zukünftigen Fahrverlauf des Fahrzeugs nur dann eingeblendet wird, wenn ein Lenkwinkel des Fahrzeugs einen vorbestimmten Betrag aufweist.

Gemäß der Erfindung umfasst der Begriff Fahrzeug beispielsweise einen PKW, einen LKW mit Laderaum sowie einen LKW mit Anhänger bzw. Auflieger, der eine Zugmaschine und einen sich nach hinten erstreckenden Abschnitt aufweist, sowie Kleintransporter (LCV) aller Art, Baumaschinen, Agrarfahrzeuge, etc. Anhänger gemäß der Erfindung können eine Achse oder mehrere Achsen aufweisen, wobei die Achsen starr und/oder drehbar sind.

Gemäß der Erfindung zieht die Zugmaschine den Anhänger bei Vorwärtsfahrt und schiebt den Anhänger bei Rückwärtsfahrt. Die Zugmaschine gemäß der Erfindung kann folglich allgemein als Antriebsmaschine zum Ziehen bzw. Schieben von Objekten bezeichnet werden.

Gemäß der Erfindung ist der vorbestimmte Betrag des Lenkwinkels größer als 0 Grad und liegt vorzugsweise in einem Bereich von 5 Grad bis 90 Grad. Der Lenkwinkel definiert dabei beispielsweise eine Verdrehung der Räder der Vorderachse gegenüber der Längsachse des Fahrzeugs bzw. der Zugmaschine. Die Räder können dabei bezüglich der Längsachse nach links oder rechts gedreht werden. Gemäß der vorliegenden Erfindung wird der Lenkwinkel durch Drehen des Lenkrads in der Fahrerkabine des Fahrzeugs eingestellt und hängt von verschiedenen Faktoren ab, wie beispielsweise der Beladung des Fahrzeugs und verschiedenen anderen Verspannungen bei der Übertragung einer Drehung des Lenkrads an die Räder. Der Einschlagwinkel des Lenkrads entspricht daher nicht exakt dem tatsächlichen Lenkwinkel.

In Abhängigkeit von der Fahrzeuggeometrie, und beispielsweise in Abhängigkeit davon, ob es sich bei dem Fahrzeug um einen einfachen LKW oder um ein Gespann mit Anhänger bzw. Auflieger handelt, kann der obengenannte Lenkwinkelbereich entsprechend abweichen.

Durch das Einblenden mindestens einer Trajektorie auf ein Bild, das den Umgebungsbereich des Fahrzeugs anzeigt, wenn der Lenkwinkel den vorbestimmten Betrag hat, wird verhindert, dass der Fahrer des Fahrzeugs durch das ständige Einblenden der Trajektorie, also auch in einem Fall, bei dem eine derartige Einblendung aufgrund der Fahrsituation nicht notwendig ist, unnötig irritiert wird.

Gemäß der Erfindung berechnet eine Berechnungseinheit die mindestens eine Trajektorie mittels mindestens einer fahrzeugbezogenen Eingangsgröße, die in einem mathematischen Modell verarbeitet wird. Ein derartiger Fahrzeugparameter ist beispielsweise der Lenkwinkel, Information von Radsensoren, etc.. Eingangsgrößen des mathematischen Modells sind beispielsweise Lenkwinkel, Geschwindigkeit des Fahrzeugs, Fahrrichtung, ABS-Radsignale, etc., wobei mindestens eine von diesen Größen, vorzugsweise wenigstens zwei derartige Eingangsgrößen verwendet werden.

Gemäß einer Weiterentwicklung der Erfindung ist die Aufnahmeeinheit zur Aufnahme eines Sichtbereichs derart ausgebildet, dass der aufgenommene Sichtbereich zumindest teilweise seitlich neben dem Fahrzeug liegt und sich über eine Länge des Fahrzeugs hinaus erstreckt. Eine derartige Aufnahmeeinheit wird beispielsweise in einem Spiegelersatzsystem verwendet. Alternativ können mehrere Aufnahmeeinheiten vorgesehen werden, wobei eine solche Aufnahmeeinheit beispielsweise eine Kamera oder ein Bildsensor ist.

Gemäß der Erfindung nimmt die Aufnahmeeinheit den seitlichen und seitlich hinteren Bereich des Fahrzeugs auf ohne dass ein Teil des Fahrzeugs bzw. der Fahrzeuggeometrie in dem aufgenommenen Sichtbereich liegt. In diesem Fall kann ein virtueller Fahrzeugbezug auf der Wiedergabeeinheit eingeblendet werden, der beispielsweise angibt, wie weit das Fahrzeug außerhalb des Sichtfelds liegt, also wie groß der Abstand zwischen einer Seitenfläche des Fahrzeugs und dem zur Fahrzeugseite zugewandten Rand des Sichtbereichs ist.

Gemäß der Erfindung ist die Aufnahmeeinheit derart angeordnet, dass sie, bezogen auf die Fahrzeugvorwärtsfahrrichtung nach hinten und/oder nach vorne und/oder zur Seite gerichtet ist. Die Darstellung auf der Bildwiedergabeeinheit entspricht dieser Perspektive und somit zumindest näherungsweise der Ansicht, die ein Fahrer hat, wenn er in einen gewöhnlichen Seitenspiegel blickt. Die Bildwiedergabeeinheit ist beispielsweise ein Monitor, digitaler Spiegel, beispielsweise ein digitaler Rückspiegel oder digitaler Seitenspiegel.

Wenn das Sichtsystem als Spiegelersatzsystem nach einem bevorzugten Ausführungsbeispiel verwendet wird, so ist es ferner möglich, dass die Anzeige auf der Bildwiedergabeeinheit dauerhaft und in Echtzeit erfolgt, wobei das Einblenden mindestens einer Trajektorie, die einen zukünftigen Fahrverlauf des Fahrzeugs anzeigt, nur angezeigt wird, wenn der vorbestimmte Lenkwinkel vorliegt.

Gemäß der Erfindung ist die Berechnungseinheit ausgelegt auch von der Aufnahmeeinheit aufgenommene Bilddaten zu analysieren und an dem Fahrzeug fest definierte Punkte als Referenzpunkt zu verwenden für die Darstellung der Trajektorie in einem Bild, das einen Sichtbereich zumindest teilweise seitlich neben dem Fahrzeug und sich über eine Länge des Fahrzeugs hinaus erstreckend zeigt. Ein derartiger fest definierter Punkt des Fahrzeugs, der als Referenzpunkt dient, ist beispielsweise eine Fahrzeugkante, Fahrzeugecke, Fahrzeugachse und/oder ein Fahrzeugrad.

Diese Analyse kann durch Bildanalyse erfolgen oder sie kann mittels zusätzlicher, am Fahrzeug angebrachter Sensoren, wie beispielsweise Abstandssensor, Radar, Infrarotsensor oder ähnlichem erfolgen, die einen Eingang in die Berechnungseinheit haben.
Beispielsweise kann die mindestens eine Trajektorie auch erst eingeblendet werden, wenn der vorbestimmte Lenkwinkel vorliegt und die Aufnahmeeinheit in der Umgebung des Fahrzeugs ein Hindernis erfasst, mit dem das Fahrzeug bei gleichbleibendem Lenkwinkel und Fahrtrichtung kollidieren wird.

Gemäß der Erfindung weist das Fahrzeug eine Zugmaschine und einen bezüglich der Zugmaschine schwenkbaren Anhänger auf. In der vorliegenden Erfindung wird unter einem Anhänger auch ein Auflieger verstanden.
Bei einem derartigen Fahrzeug mit Zugmaschine und Anhänger ist gemäß der Erfindung die Berechnungseinheit angepasst zum Vorausberechnen von mindestens einer ersten Trajektorie für die Zugmaschine und mindestens einer zweiten Trajektorie für den Anhänger für einen zukünftigen Fahrverlauf von Zugmaschine bzw. Anhänger.

Erfindungsgemäß wird in dem auf der Bildwiedergabeeinheit angezeigten Bild des seitlichen und hinteren Bereichs (seitlicher hinterer Bereich des Anhängers) eine erste Trajektorie für die Zugmaschine und eine zweite Trajektorie für den Anhänger angezeigt. Beispielsweise erfolgt die Anzeige der Trajektorie mittels einer Linie, die sich in Abhängigkeit von dem Lenkwinkel entsprechend krümmt, in einer ersten Farbe für die Zugmaschine und einer zweiten Farbe für den Anhänger. Ebenso ist es möglich, dass eine Trajektorie nicht durch eine Linie, sondern durch eine Fläche dargestellt wird, die beispielsweise eine virtuelle Leitfläche oder Leitplanke ist zur Unterstützung des Fahrers bei Kurvenfahrt oder beim Rangieren.
Wie oben erwähnt wird auch bei einem Fahrzeug mit einer Zugmaschine und einem Anhänger die erste bzw. die zweite Trajektorie angezeigt, wenn der Lenkwinkel der Zugmaschine einen vorbestimmten Betrag aufweist, um so den Fahrer bei einer "normalen" Fahrt (also bei einer geraden Vorwärts- bzw. Rückwärtsfahrt) nicht unnötig zu irritieren.

Gemäß der Erfindung kann bei einem Fahrzeug mit einer Zugmaschine und einem Anhänger das obengenannte mathematische Modell als Ausgangsgröße einen zwischen der Zugmaschine und dem Anhänger gebildeten Knickwinkel als Ausgangsgröße bereitstellen.
Gemäß einer Weiterentwicklung der Erfindung wird zur Darstellung einer Trajektorie in einem auf der Bildwiedergabeeinheit angezeigten Bild mindestens ein vorher definierter Punkt an dem Fahrzeug als Referenzpunkt verwendet. Ein derartiger Referenzpunkt kann beispielsweise die hinterste Achse des Fahrzeugs sein bzw. für den Fall, dass das Fahrzeug eine Zugmaschine und einen Anhänger aufweist, die hinterste Achse der Zugmaschine und/oder die hinterste Achse des Anhängers. Alternativ kann auch eine Ladekante des Fahrzeugs als Referenzpunkt verwendet werden, der verwendet wird zur Darstellung der Trajektorie. Ein derartiger Referenzpunkt verläuft somit beispielsweise bei einer Rückwärtsfahrt auf einer derartigen Trajektorie. Andere geeignete Referenzpunkte am Fahrzeug, wie beispielsweise Ecken oder Kanten können verwendet werden zur Darstellung der Trajektorie.
Bezüglich der Berechnungseinheit ist festzuhalten, dass diese als separate Einheit für das Sichtsystem, aufgeteilt in mehrere Einheiten, als integrierte Einheit in einem Fahrzeugbordcomputer (ECU) oder ähnliches, vorliegen kann.
Gemäß der Erfindung erfolgt das Einblenden der Trajektorie auf dem Bild, das den seitlichen Bereich neben dem Fahrzeug und den seitlichen hinteren Bereich des Fahrzeugs darstellt, transparent durch eine Linie und/oder eine Fläche, wobei Linie und Fläche geeignet skaliert und angepasst sein können zur besseren Darstellung eines zukünftigen Fahrverlaufs des Fahrzeugs.

### Kurze Beschreibung der Zeichnungen

Nachfolgend wird die Erfindung beispielhaft unter Bezugnahme auf die beigefügten Zeichnungen beschrieben, wobei gleiche Bezugszeichen gleiche oder entsprechende Komponenten in den Figuren kennzeichnen. Es zeigen:
- Fig. 1: schematisch ein Sichtsystem gemäß einem Ausführungsbeispiel für ein Fahrzeug;
- Fig. 2: eine Draufsicht auf ein Fahrzeug, die Erfassungsbereiche (Sichtbereiche) von Aufnahmeeinheiten, die am Fahrzeug angebracht sind, veranschaulicht;
- Fig. 3: eine schematische Darstellung eines Fahrzeugs mit dargestellter Trajektorie;
- Fig. 4: eine Draufsicht auf ein Fahrzeug mit Zugmaschine und Anhänger (Auflieger), die einen seitlichen Erfassungsbereich einer Aufnahmeeinheit, die am Fahrzeug angebracht ist, veranschaulicht;
- Fig. 5: eine schematische Darstellung eines Beispiels für ein Bild, das auf der Bildwiedergabeeinheit zu sehen ist;
- Fig. 6: eine Draufsicht auf das Fahrzeug gemäß Fig.4 in einer Kurvenfahrt;
- Fig. 7: eine schematische Darstellung eines weiteren Beispiels für ein Bild, das auf der Wiedergabeeinheit zu sehen ist, für die in Fig. 6 gezeigte Fahrsituation;
- Fig. 8: eine schematische Darstellung eines weiteren Beispiels für ein Bild, das auf der Bildwiedergabeeinheit zu sehen ist, für die in Fig. 6 gezeigte Fahrsituation;
- Fig. 9: eine Draufsicht auf ein Fahrzeug mit einer Zugmaschine und einem Anhänger, die Erfassungsbereiche einer Aufnahmeeinheit, die am Fahrzeug angebracht ist, veranschaulicht;
- Fig. 10: eine schematische Darstellung eines Beispiels für ein Bild, das auf der Bildwiedergabeeinheit zu sehen ist, für die in Fig. 9 gezeigte Fahrsituation;
- Fig. 11: eine Draufsicht auf ein Fahrzeug mit einer Zugmaschine und einem Anhänger, die Erfassungsbereiche der Aufnahmeeinheit, die am Fahrzeug angebracht ist, veranschaulicht;
- Fig. 12: eine schematische Darstellung eines Beispiels für ein Bild, das auf der Bildwiedergabeeinheit zu sehen ist, für die in Fig. 11 gezeigte Fahrsituation;
- Fig. 13: ein weiteres Beispiel für ein Bild, das auf der Bildwiedergabeeinheit angezeigt werden kann; und
- Fig. 14: ein weiteres Beispiel für ein Bild, das auf der Bildwiedergabeeinheit angezeigt werden kann.

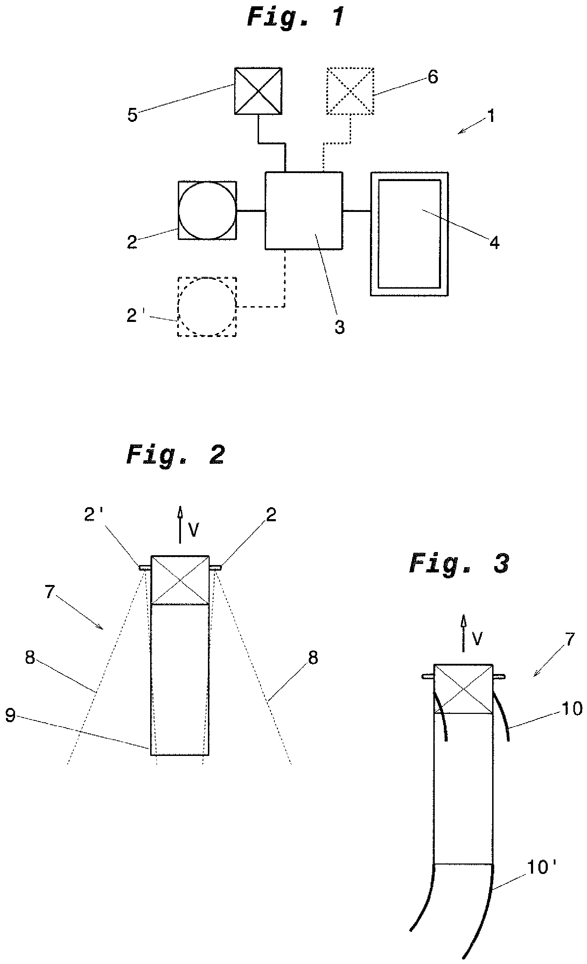

Fig. 1 zeigt schematisch ein Sichtsystem 1 gemäß einem Ausführungsbeispiel der Erfindung. Das Sichtsystem 1 weist ein oder mehrere Aufnahmeeinheiten 2, 2', eine Berechnungseinheit 3 und eine Bildwiedergabeeinheit 4 auf. Die Aufnahmeeinheit 2, 2' kann beispielsweise eine Kamera oder ein Bildsensor sein.

Beispielsweise nimmt eine erste Aufnahmeeinheit 2 ein Bild, das einem rechten Seitenspiegel entspricht, auf, und eine zweite Aufnahmeeinheit 2' nimmt ein Bild auf, das einem linken Seitenspiegel entspricht, und diese Bilder werden auf der Bildwiedergabeeinheit 4 nebeneinander, z.B. durch Trennlinien getrennt, dargestellt. Alternativ ist es auch möglich, dass mehrere Aufnahmeeinheiten 2, 2' ein gemeinsames Bild aufnehmen, d.h., dass mittels der Berechnungseinheit 3 die einzelnen Bilder der Aufnahmeeinheiten 2, 2' in ein auf der Bildwiedergabeeinheit 4 darzustellendes gemeinsames Bild, das beispielsweise nahtlos ineinander übergeht, zusammengesetzt werden.

Das Sichtsystem 1, wie in Fig. 1 gezeigt, weist ferner eine Einheit 5 auf, die eine externe Eingangsgröße liefert. Die externe Einheit 5 ist mit der Berechnungseinheit 3 verbunden, so dass die von der Einheit 5 bereitgestellte Eingangsgröße von der Berechnungseinheit 3 verwendet werden kann.

Das Sichtsystem 1, wie in Fig. 1 gezeigt, kann ferner mit weiteren Fahrzeugsensoren oder ähnlichem verbunden sein, beispielsweise ist schematisch in Fig. 1 eine weitere Einheit 6 für Fahrzeug- und/oder Umgebungssensoren vorgesehen. Beispielsweise kann ein solcher Sensor ein Lenkwinkelsensor, ein Geschwindigkeitssensor, ein Abstandssensor oder ähnliches sein.

Die Berechnungseinheit 3 für das Sichtsystem 1 wie in Fig. 1 dargestellt kann als separate Einheit ausgebildet sein, oder wahlweise auch in die Bildwiedergabeeinheit 4, in die Aufnahmeeinheit 2, 2' oder in eine nicht gezeigte Fahrzeug-ECU integriert sein.

Die Aufnahmeeinheit 2 gemäß Fig. 1 nimmt Bilder der Fahrzeugumgebung auf und ggf. eines Teils der Fahrzeuggeometrie und liefert diese Bilddaten an die Berechnungseinheit 3. Insbesondere nimmt die Aufnahmeeinheit 2, 2' seitliche Bereiche neben dem Fahrzeug und seitliche Bereiche hinter dem Fahrzeug auf. Die Berechnungseinheit 3 enthält ein mathematisches Modell, das wenigstens zwei von den Einheiten 5, 6 gelieferte Eingangsgrößen hat (Lenkwinkel, Geschwindigkeit, Fahrrichtung, Gierrate, ABS-Radsignale, etc.).

Gemäß dem in Fig. 1 gezeigten bevorzugten Ausführungsbeispiel des Sichtsystems 1 gemäß der Erfindung ist dieses als Spiegelersatzsystem ausgebildet, insbesondere zur Darstellung eines seitlichen Bereichs neben dem Fahrzeug und eines Bereichs seitlich hinter dem Fahrzeug.

Fig. 2 zeigt schematisch eine Draufsicht auf ein Fahrzeug 7 mit möglichen Sichtwinkeln von Aufnahmeeinheiten 2, 2' für eine Darstellung entsprechend einem rechten und einem linken Seitenspiegel an dem Fahrzeug 7. Die Aufnahmeeinheiten 2, 2' sind in Fig. 2 links bzw. rechts am Fahrzeug 7, hier einem Nutzfahrzeug ohne Anhänger, angebracht und zwar in Höhe des Fahrerhauses.

Sichtkegel (Sichtbereiche oder Erfassungsbereiche) 8 der Aufnahmeeinheiten 2, 2' verlaufen nach hinten und seitlich vom Fahrzeug 7 bezogen auf die Vorwärtsfahrtrichtung V, wie in Fig. 2 in der Draufsicht auf das Fahrzeug 7 angedeutet ist. Entsprechend erfassen die Sichtkegel 8 links bzw. rechts neben dem Fahrzeug 7 einen Bereich, der von vorne nach hinten (bezogen auf die Vorwärtsfahrtrichtung V) verläuft und sich dabei in seitlicher Richtung aufweitet, und erfassen neben einem seitlich neben dem Fahrzeug liegenden Bereich auch einen Teil der Fahrzeuggeometrie 9 sowie einen Bereich seitlich hinter dem Fahrzeug 7.

Alternativ kann der Sichtkegel 8 auch derart sein, dass die Fahrzeuggeometrie 9 nicht erfasst wird. In diesem Fall kann beispielsweise die Berechnungseinheit 3 mittels fahrzeugbezogener Eingangsgrößen einen Abstand zwischen der Fahrzeuggeometrie 9 und dem Sichtkegel 8 berechnen und diesen in geeigneter Weise dem Fahrer des Fahrzeugs 7 auf der Bildwiedergabeeinheit 4 anzeigen.

Fig. 3 zeigt eine Draufsicht auf das Fahrzeug 7 gemäß Fig. 2 mit dargestellter Trajektorie 10 für einen vorderen Bereich des Fahrzeugs und einer Trajektorie 10' für einen hinteren Bereich des Fahrzeugs 7 bei einer Kurvenfahrt in Fahrtrichtung V.

Speziell fährt das Fahrzeug 7 in Fig. 3 eine Linkskurve in Fahrtrichtung V, wobei die Trajektorie 10 einen Fahrverlauf der Vorderräder darstellt und die Trajektorie 10' einen Fahrverlauf der Hinterräder darstellt. Die Trajektorie 10 bzw. 10' wird durch die Berechnungseinheit 3 des Sichtsystems 1 gemäß Fig. 1 berechnet und beispielsweise auf der Bildwiedergabeeinheit 4 eingeblendet. Die Trajektorie 10 bzw. 10' kann den tatsächlichen Fahrverlauf darstellen oder alternativ einen zukünftigen Fahrverlauf, der in Abhängigkeit von einem Lenkwinkel des Fahrzeugs von der Berechnungseinheit 3 berechnet wird. Zur übersichtlicheren Darstellung kann die Trajektorie 10 in einer ersten Farbe auf der Bildwiedergabeeinheit 4 angezeigt werden, und die Trajektorie 10' kann in einer zweiten Farbe auf der Bildwiedergabeeinheit 4 angezeigt werden. Obwohl in der Fig. 3 die Trajektorie 10, 10' als Linie gezeigt ist, kann alternativ auch ein Bereich bzw. eine Fläche dargestellt werden.

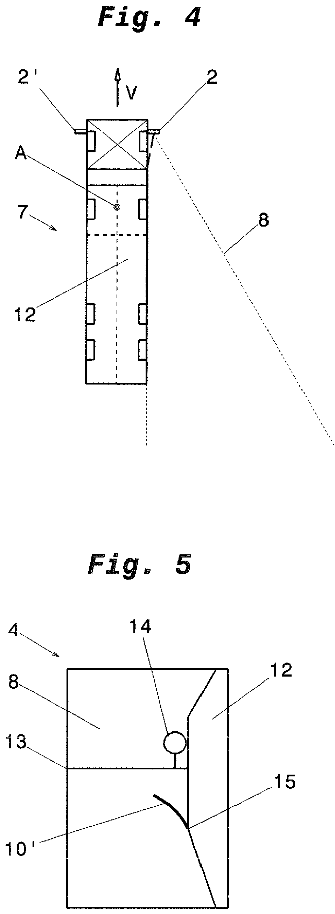

Fig. 4 zeigt eine schematische Draufsicht auf ein Fahrzeug 7 mit einer Zugmaschine 11 und einem Anhänger 12. Speziell ist der Anhänger 12 als Auflieger ausgebildet, der auf der Zugmaschine 11 aufliegt und um die Achse A bezüglich der Zugmaschine 11 seitlich schwenkbar ist.

Wie in Fig. 4 gezeigt wird auch bei diesem Fahrzeug 7 von einer Aufnahmeeinheit 2 ein Bereich seitlich neben dem Fahrzeug aufgenommen, der sich bis seitlich hinter das Fahrzeug erstreckt. Obwohl in Fig. 4 nur der rechte seitliche Bereich des Fahrzeugs 7 aufgenommen wird ist es selbstverständlich, dass auch ein Bereich links seitlich neben dem Fahrzeug 7 aufgenommen werden kann zur Darstellung auf der Bildwiedergabeeinheit 4 gemäß dem Sichtsystem von Fig. 1.
Bei Verwendung des Sichtsystems 1 gemäß dem bevorzugten Ausführungsbeispiel als Spiegelersatzsystem, insbesondere als Seitenspiegel, wird somit dem Fahrer der Zugmaschine 11 ein Bild auf der Bildwiedergabeeinheit 4 angezeigt, das den Sichtbereich 8 darstellt, wie in Fig. 5 gezeigt. Das in Fig.5 gezeigte Bild zeigt in etwa die in Fig. 3 dargestellte Fahrsituation. Wie in Fig. 5 gezeigt sieht der Fahrer der Zugmaschine 11 auf der Wiedergabeeinheit 4 ein Bild des Sichtbereichs 8 einschließlich einer hinteren Fahrzeuggeometrie 9 des Anhängers 12. Fig. 5 zeigt ferner zur besseren Verdeutlichung einen Horizont 13 und einen schematisch dargestellten Baum 14.
Bei dem Sichtsystem 1 gemäß dem bevorzugten Ausführungsbeispiel wird eine Trajektorie 10', ähnlich wie in Fig. 3 gezeigt, in das von der Aufnahmeeinheit 2 aufgenommene Bild mit dem Sichtbereich 8 eingeblendet. Eine derartige Trajektorie 10', wie in Fig. 5 gezeigt, kann einen tatsächlichen Fahrverlauf des Anhängers 12 von Figur 4 anzeigen. Alternativ kann die Trajektorie 10' des Anhängers 12 einen zukünftigen Fahrverlauf des Anhängers 12 anzeigen, beispielsweise bei einem Rangiervorgang, wenn das Fahrzeug 7 beispielsweise vorwärts oder rückwärts eine Kurve fährt.
Die Trajektorie 10' wird dabei von der Berechnungseinheit 3 mittels fahrzeugbezogener Eingangsgrößen berechnet, unter Verwendung von beispielsweise dem Lenkwinkel. Die Trajektorie 10' wie in Fig. 5 gezeigt kann nur angezeigt werden, wenn der Lenkwinkel einen vorbestimmten Betrag erreicht, beispielsweise bei einem starken Einschlagen des Lenkrads, so dass der Anhänger 12 stark gegenüber der Zugmaschine 11 um die Achse A ausschwenkt.

Wie in Fig. 5 gezeigt erstreckt sich die Trajektorie 10' von einer hinteren linken unteren Ecke des Anhängers 12 aus (die hintere rechte Ecke wenn man hinter dem Fahrzeug steht) in Richtung Horizont 13. Gemäß diesem Ausführungsbeispiel ist die linke untere Ecke 15 ein vorher definierter Punkt an dem Anhänger 12, der als Referenzpunkt verwendet wird zur Darstellung der Trajektorie 10'. Die linke untere Ecke 15 des Anhängers 12 verläuft somit auf der Trajektorie 10'.

Anstelle der linken unteren Ecke 15 des Anhängers 12, wie in Fig. 5 gezeigt, kann auch eine untere Kante und/oder obere Kante bzw. untere Ecke und/oder obere Ecke des Anhängers 12 ausgewählt werden, von der sich jeweils eine Trajektorie erstreckt. Im Fall einer oberen Ecke bzw. Kante des Anhängers 12 wird der Fahrer des Fahrzeugs 7 beispielsweise bei der Beurteilung unterstützt, ob der Anhänger 12 höhenmäßig unter ein Hindernis passt.

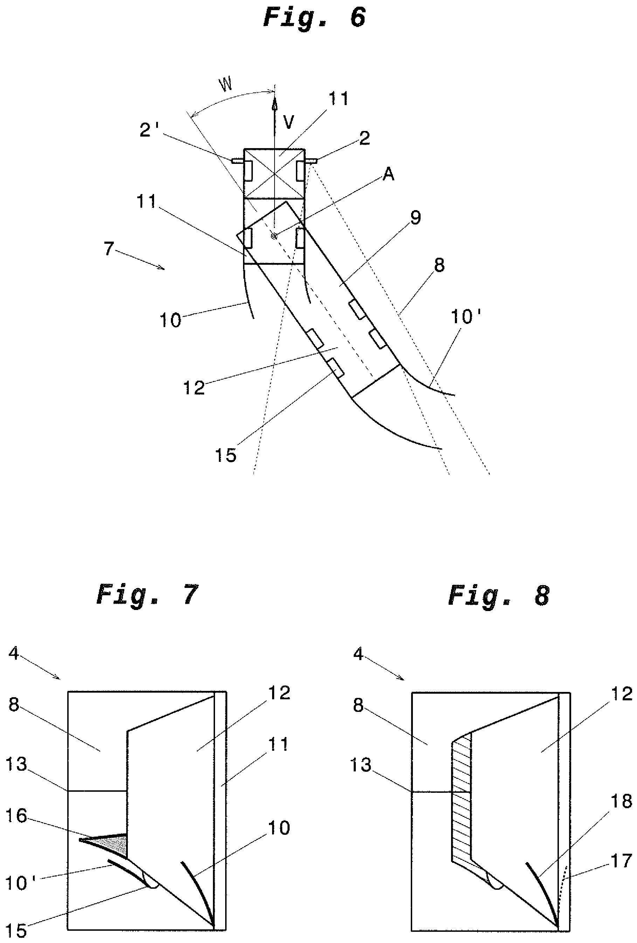

Fig. 6 zeigt eine schematische Draufsicht auf das Fahrzeug 7 gemäß Fig. 4, bei der der Anhänger 12 gegenüber der Zugmaschine 11 um die Achse A seitlich nach rechts ausgeschwenkt ist. Das Ausmaß der Ausschwenkung wird speziell durch einen Lenkwinkel W des Fahrzeugs 7 bestimmt. Eine derartige in Fig. 6 gezeigte Fahrsituation beschreibt beispielsweise das Fahren einer Rechtskurve.

Wie in Fig. 6 gezeigt wird der Sichtbereich 8, der von der Aufnahmeeinheit 2 aufgenommen wird, von der Fahrzeuggeometrie 9 teilweise verdeckt. Aus diesem Grund kann der Fahrer der Zugmaschine 11 den von der Fahrzeuggeometrie 9 verdeckten Bereich nicht einsehen, bzw. dieser Bereich kann von der Aufnahmeeinheit 2 nicht und auf der Bildwiedergabeeinheit angezeigt werden. Zur Unterstützung des Fahrers wird die bereits obengenannten Trajektorie 10, 10' in das auf der Bildwiedergabeeinheit 4 angezeigte Bild eingeblendet. Gemäß diesem Ausführungsbeispiel wird als vordefinierter Punkt am Fahrzeug, der als Referenzpunkt zur Darstellung der Trajektorie 10, 10' dient, jeweils die linke und rechte unter Ecke der Zugmaschine 11 für die Trajektorie 10 und die linke und rechte untere Ecke des Anhängers 12 für die Trajektorie 10' verwendet. Obwohl nicht in der Fig. 6 gezeigt, kann entsprechend die Aufnahmeeinheit 2' einen Sichtbereich auf der der linken Seite des Fahrzeugs 7 erfassen und entsprechende Trajektorien in ein erfasstes Bild des seitlichen und seitlich hinteren Bereichs des Fahrzeugs 7 einblenden.

Fig.7 zeigt eine schematische Ansicht für ein Beispiel der Anzeige eines Bereichs seitlich neben dem Anhänger 12 und seitlich hinter dem Anhänger 12 mit eingeblendeter Trajektorie 10, 10' zur Unterstützung des Fahrers der Zugmaschine 11. Gemäß diesem Beispiel kann der Fahrer in dem auf der Bildwiedergabeeinheit 4 angezeigten Bild des seitlichen bzw. seitlich hinteren Bereichs des Anhängers 12 anhand der Trajektorie 10 und der Trajektorie 10' einen zukünftigen Fahrverlauf des Anhängers 12 bzw. der Zugmaschine 11 erkennen. Gemäß diesem Beispiel wird beispielsweise bei einem Rückwärtsrangieren die Trajektorie 10 bzw. 10' von der Berechnungseinheit 3 in Abhängigkeit von einer fahrzeugbezogenen Eingangsgröße, wie oben erwähnt, im Voraus berechnet und angezeigt. Gemäß dem in Fig. 7 gezeigten Beispiel wird für den Anhänger 12 als vordefinierter Punkt, der als Referenzpunkt zur Darstellung der Trajektorie 10' genommen wird, die hintere Achse 15 verwendet. Speziell erstreckt sich die Trajektorie 10' von einem Hinterrad des Anhängers 12 aus.
Ferner ist in Fig. 7 eine Verladekante 16 gezeigt, die alternativ als Referenzpunkt zur Darstellung der Trajektorie 10' verwendet werden kann. Die Trajektorie 10 bzw. 10' kann nur bei einer vorbestimmten Fahrsituation, beispielsweise beim Rückwärtsfahren, ab einem vorbestimmten Einschlagwinkel des Lenkrads, der einem Lenkwinkel des Fahrzeugs entspricht, in das von der Aufnahmeeinheit 2 aufgenommene Bild eingeblendet werden. Ein Bereich für einen Lenkwinkel liegt beispielsweise zwischen 0 und 90 Grad, vorzugsweise zwischen 5 und 90 Grad.

Fig. 8 zeigt eine schematische Darstellung eines Bilds, das einem Fahrer des Fahrzeugs 7 auf der Bildwiedergabeeinheit 4 angezeigt wird. Gemäß diesem Ausführungsbeispiel zur Darstellung des von der Aufnahmeeinheit 2 aufgenommenen Sichtbereichs 8 wird dem Fahrer des Fahrzeugs auf der Bildwiedergabeeinheit 4 eine Ist-Trajektorie 17 und eine Soll-Trajektorie 18 in das von der Aufnahmeeinheit 2 aufgenommene Bild mit dem Sichtbereich 8 eingeblendet. Auf diese Weise kann der Fahrer des Fahrzeugs 7 bei einem Rangiervorgang unterstützt werden, indem der Lenkwinkel des Fahrzeugs derart geändert wird, dass die Ist-Trajektorie 17 und die Soll-Trajektorie 18 zusammenfallen, wodurch der Anhänger 12 in den durch schraffierten Bereich in Fig. 8 gezeigten Bereich hinter dem Anhänger 12 bewegt wird.

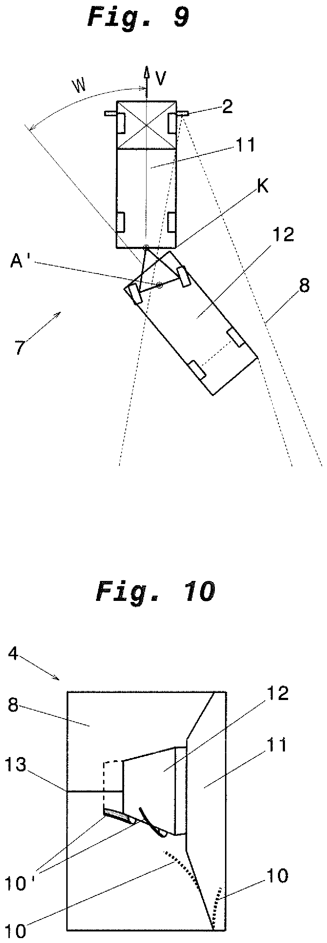

Fig. 9 zeigt eine Draufsicht auf ein Fahrzeug mit einer Zugmaschine 11 und einem Anhänger 12 ähnlich wie in den Fig. 4 und 6 mit dem Unterschied, dass der Anhänger 12 in diesem Ausführungsbeispiel kein Auflieger ist, sondern ein separater Anhänger, der um eine Achse A' bezüglich der Zugmaschine 11 seitlich ausschwenkbar ist. Speziell hat der Anhänger 12 zwei Achsen, von denen die in Vorwärtsfahrtrichtung gesehene vordere Achse drehbar und die hintere Achse starr ist.

Gemäß einem derartigen Fahrzeug 7, wie in Fig. 9 gezeigt, besteht die Gefahr, dass bei einem zu starken Einlenken (zu großer Lenkwinkel W) die Zugmaschine 11 mit dem Anhänger 12 an der Stelle K kollidiert.

Gemäß dem Sichtsystem der Erfindung kann der Fahrer des Fahrzeugs 7 dabei unterstützt werden, eine derartige Kollision zu verhindern, indem zusätzlich zu dem von der Aufnahmeeinheit 2 aufgenommenen Sichtbereich 8 rechts neben dem Fahrzeug 7 mehrere Trajektorien eingeblendet werden, wie in Fig. 10 gezeigt.

Fig. 10 zeigt ein Beispiel für eine Darstellung auf der Bildwiedergabeeinheit 4, die dem Fahrer des Fahrzeugs 7 gemäß Fig. 10 angezeigt wird, bei einer Kurvenfahrt.

Speziell werden in Fig. 10 zwei Trajektorien für die Zugmaschine 11 eingeblendet, wobei als Referenzpunkte beispielsweise eine linke hintere Ecke (rechte hintere Ecke wenn man hinter dem Fahrzeug 7 steht) der Zugmaschine 11 für die erste Trajektorie 10 und eine linke vordere Ecke (rechte vordere Ecke wenn man hinter dem Fahrzeug 7 steht) für die zweite Trajektorie 10 verwendet. Die erste und die zweite Trajektorie 10 der Zugmaschine 11 sind in Fig. 10 punktiert dargestellt.

Aufgrund der drehbaren Vorderachse des Anhängers 12 des Fahrzeugs 7 gemäß Fig. 9 zeigt Fig. 10 ferner zwei Trajektorien 10' für den Anhänger 12, wobei die Trajektorie 10', die sich von der drehbaren Vorderachse aus erstreckt richtungsmäßig verschieden ist von der Trajektorie 10', die sich von der Hinterachse des Anhängers 12 aus erstreckt. Speziell zeigt die Fig. 10 die Trajektorie 10', die sich von der Hinterachse des Anhängers 12 aus erstreckt als Fläche bzw. dicke Linie.

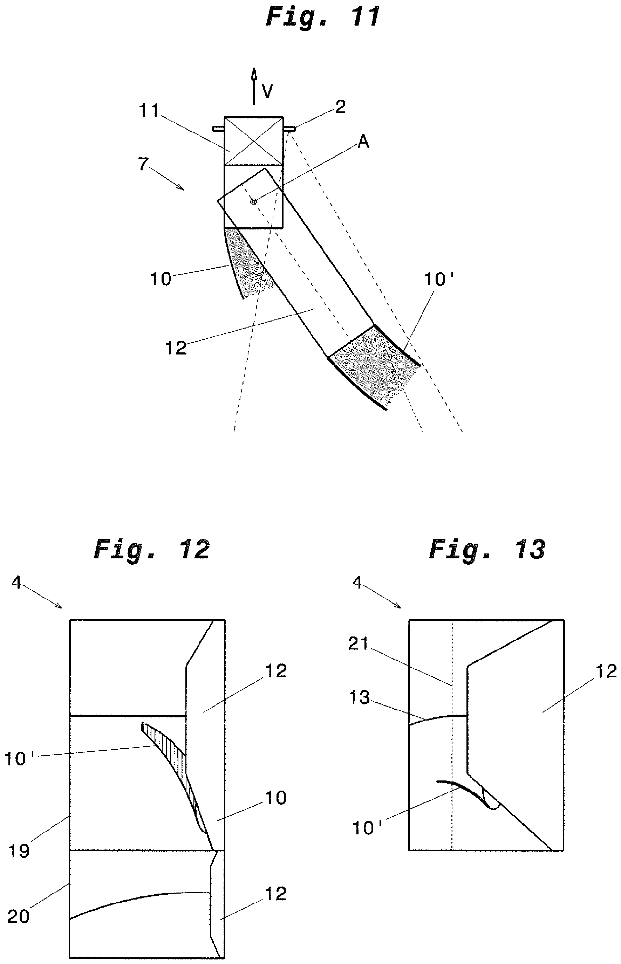

Fig. 11 zeigt eine schematische Draufsicht auf ein Fahrzeug 7 mit einer Zugmaschine 11 und einem Anhänger 12, ähnlich wie in den Fig. 4 und 6, wobei die Trajektorie 10, 10' als Fläche gezeigt sind.

Fig. 12 zeigt eine schematische Darstellung eines Bilds, das dem Fahrer des Fahrzeugs 7 auf der Bildwiedergabeeinheit 4 angezeigt wird, wenn das Sichtsystem 1 als Spiegelersatzsystem für einen Haupt- und einen Weitwinkelspiegel 19, 20 des Fahrzeugs 7 verwendet wird.

Bei der in Fig. 12 gezeigten Darstellung ist das Bild des Hauptspiegels 19 auf der Bildwiedergabeeinheit 4 oberhalb des Bilds des Weitwinkelspiegels 20 vorgesehen und angeordnet. Alternativ können, wie in Fig. 13 gezeigt, das Bild des Haupt- und das Bild des Weitwinkelspiegels 19, 20 mittels der Berechnungseinheit 3 auch so angeordnet werden, dass diese nahtlos ineinander übergehen. Eine in Fig. 13 gezeigte, gestrichelt angedeutete Grenzlinie 21, ab der eine gestauchte Darstellung erfolgt, zwischen den beiden Bildern muss nicht unbedingt vorgesehen sein.

Wie in Fig. 12 gezeigt ist die Trajektorie 10' des Hauptspiegels 19 in diesem Ausführungsbeispiel nicht als Linie ausgebildet, sondern gibt einen Bereich (Fläche) an.

Wie in Fig. 13 gezeigt ist aufgrund der Panoramaansicht die Trajektorie 10' des Anhängers 12 ab der gestrichelten Linie 21 gestaucht.

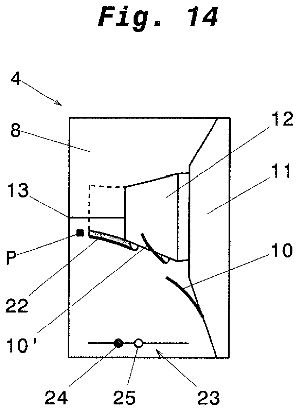

Fig. 14 zeigt ein weiteres Beispiel für ein Bild, das auf der Bildwiedergabeeinheit angezeigt werden kann. Ähnlich wie in Fig. 8 wird in diesem Bild eine Soll-Trajektorie 22 eingeblendet. Die Soll-Trajektorie 22 kann vom Fahrer des Fahrzeugs 7 durch Drehung des Lenkrads derart eingestellt werden, dass ein Zielpunkt P angepeilt wird. Der Zielpunkt P kann dabei beispielsweise eine Einfahrt oder ein Parkplatz sein. Bei Erreichen der gewünschten Soll-Trajektorie 22 kann der Fahrer beispielsweise durch Betätigung eines Schalters die gewählte Soll-Trajektorie 22 bestätigen.

Fig. 14 zeigt ferner entsprechende Trajektorien 10 und 10' für die Zugmaschine 11 bzw. den Anhänger 12, die sich in Abhängigkeit von der Soll-Trajektorie 22 entsprechend ändern und einen zukünftigen Fahrverlauf bei der eingestellten Soll-Trajektorie 22 angeben.
Fig. 14 zeigt ferner eine Anzeige 23 in Form einer geraden Linie, auf der sich eine erste Markierung 24 und eine zweite Markierung 25 befinden. Die erste Markierung 24 repräsentiert dabei beispielsweise den Zielort P und die zweite Markierung 25 eine augenblickliche Situation. Durch die Anzeige 23 wird dem Fahrer des Fahrzeugs 7 angezeigt, wie groß die Abweichung von dem Zielpunkt P bei gleichbleibenden Lenkradeinschlag ist. Auf diese Weise kann der Fahrer des Fahrzeugs 7 in einfacher Weise durch entsprechende Lenkradbewegung die erste und zweite Markierung in Übereinstimmung bringen, wodurch sichergestellt wird, dass der Zielpunkt P auch tatsächlich erreicht wird.
Die erste und zweite Markierung 24, 25 habe gemäß diesem Ausführungsbeispiel eine Kreisform. Beliebig andere Formen, wie Beispielsweise Dreieck, Rechteck, Strich, etc. können gewählt werden. Bei Wahl einer identischen Form für die erste und zweite Markierung 24, 25 haben die Markierung 24, 25 vorzugweise unterschiedliche Farben oder Schraffierungen. Obwohl die Erfindung im Vorangegangenen unter Bezugnahme auf bevorzugte Ausführungsbeispiele bzw. bevorzugte Darstellungen eines Bilds eines seitlichen und seitlich hinteren Bereichs eines Fahrzeugs mit eingeblendeter Trajektorie gezeigt worden ist, ist es selbstverständlich, dass verschiedene Abwandlungen und Änderungen vorgenommen werden können, ohne den Bereich der Erfindung zu verlassen. Beispielsweise können auch die in den Fig. 3, 6, 9 und 11 gezeigten Darstellungen zusätzlich oder alternativ auf der Bildwiedergabeeinheit 4 angezeigt werden zu Unterstützung des Fahrers beim Fahren.
Obwohl im Vorangegangenen die Trajektorien als Linien oder Flächen gezeigt sind, sind beliebig andere Darstellungsformen denkbar.

### Bezugszeichenliste

- 1: Sichtsystem
- 2: Aufnahmeeinheit
- 3: Berechnungseinheit
- 4: Bildwiedergabeeinheit
- 5: Einheit
- 6: weitere Einheit
- 7: Fahrzeug
- 8: Sichtbereich (Sichtkegel)
- 9: Fahrzeuggeometrie
- 10, 10': Trajektorie
- 11: Zugmaschine
- 12: Anhänger
- A: Achse
- 13: Horizont
- 14: Baum
- 15: hintere Achse
- 16: Verladekante
- 17: Ist-Trajektorie
- 18: Soll-Trajektorie
- A': Achse
- K: Kollisionsstelle
- 19: Hauptspiegel
- 20: Weitwinkelspiegel
- 21: Grenzlinie
- 22: Soll-Trajektorie
- 23: Anzeige
- 24: erste Markierung
- 25: zweite Markierung

## Patentansprüche

1. Sichtsystem (1) für ein Fahrzeug (7), mit
einer Aufnahmeeinheit (2) zur Aufnahme eines Sichtbereichs (8);
einer Berechnungseinheit (3), die angepasst ist, aus den aufgenommenen Bilddaten darzustellende Bilddaten zu generieren und an eine Bildwiedergabeeinheit (4) zu liefern, wobei die darzustellenden Bilddaten den durch die Aufnahmeeinheit (2) aufgenommenen Sichtbereich (8) beinhalten,
die Bildwiedergabeeinheit (4) zur für den Fahrer des Fahrzeugs (7) einsehbaren Darstellung der darzustellenden Bilddaten angepasst ist, und
die Berechnungseinheit (3) angepasst ist, mindesten eine Trajektorie (10, 10') über einen zukünftigen Fahrverlauf des Fahrzeugs (7) in die auf der Bildwiedergabeeinheit (4) angezeigten darzustellenden Bilddaten einzublenden, wenn ein Lenkwinkel des Fahrzeugs (7) einen vorbestimmten Betrag aufweist, **dadurch gekennzeichnet, dass**
das Fahrzeug (7) eine Zugmaschine (11) und einen bezüglich der Zugmaschine (11) schwenkbaren Anhänger (12) aufweist, und die Berechnungseinheit (3) angepasst ist zur Vorausberechnung von mindestens einer ersten Trajektorie (10) der Zugmaschine (11) und mindestens einer zweiten Trajektorie (10') des Anhängers (12) für einen zukünftigen Fahrverlauf von Zugmaschine (11) und Anhänger (12), wobei das auf der Bildwiedergabeeinheit angezeigte Bild einen seitlichen und hinteren Bereich betrifft und eine erste Trajektorie für die Zugmaschine und eine zweite Trajektorie für den Anhänger anzeigt.

2. Sichtsystem nach Anspruch 1, bei dem die Berechnungseinheit (3) angepasst ist mittels mindestens einer fahrzeugbezogenen Eingangsgröße die mindestens eine Trajektorie (10, 10') zu berechnen.

3. Sichtsystem nach Anspruch 2, bei dem die mindestens eine fahrzeugbezogene Eingangsgröße in einem mathematischen Modell verarbeitet wird.

4. Sichtsystem nach Anspruch 3, bei dem das mathematische Modell wenigstens zwei Eingangsgrößen aufweist

5. Sichtsystem nach Anspruch 4, bei dem die wenigstens zwei Eingangsgrößen ausgewählt sind aus Lenkwinkel, Fahrgeschwindigkeit, Fahrrichtung, Gierrate und/oder ABS-Radsignalen einer Lenkachse des Fahrzeugs (7).

6. Sichtsystem nach einem der Ansprüche 1 bis 5, bei dem sich der von der Aufnahmeeinheit (2) aufgenommene Sichtbereich (8) zumindest teilweise seitlich neben dem Fahrzeug (7) befindet und sich über eine Länge des Fahrzeugs (7) hinaus erstreckt.

7. Sichtsystem nach einem der Ansprüche 6, bei dem die mindestens eine Trajektorie (10, 10') in dem von der Aufnahmeeinheit (2) aufgenommenen Sichtbereich (8) einblendbar ist.

8. Sichtsystem nach einem der Ansprüche 1 bis 7, bei dem die mindestens eine erste Trajektorie (10) und/oder die mindestens eine zweite Trajektorie (10') in die auf der Bildwiedergabeeinheit (4) angezeigten darzustellenden Bilddaten eingeblendet werden, wenn der Lenkwinkel der Zugmaschine (11) den vorbestimmen Betrag aufweist.

9. Sichtsystem nach einem der Ansprüche 1 bis 8, bei dem das mathematische Modell als Ausgangsgröße einen zwischen der Zugmaschine (11) und dem Anhänger (12) gebildeten Knickwinkel bereitstellt.

10. Sichtsystem nach einem der vorangegangenen Ansprüche, bei dem zur Darstellung der Trajektorie (10, 10') mindestens ein vorher definierter Punkt an dem Fahrzeug (7) als Referenzenzpunkt verwendet wird.

11. Sichtsystem nach Anspruch 10, bei dem der mindestens eine vordefinierte Punkt auf der hintersten Achse (15) des Fahrzeugs (7) bzw. der hintersten Achse (15) der Zugmaschine (11) und/oder der hintersten Achse (15) des Anhängers (12) vorgesehen ist.

## Claims

1. A visual system (1) for a vehicle (7), comprising
a capturing unit (2) for capturing a field of view (8);
a calculation unit (3) adapted to generate image data to be displayed based on the captured image data, and to supply the same to an image display unit (4), wherein the image data to be displayed include the field of view (8) captured by the capturing unit (2),
the image display unit (4) adapted to display the image data to be displayed such that they are visible for the driver of the vehicle (7), and
the calculation unit (3) adapted to superimpose at least one trajectory (10, 10') of a future track/driving curve of the vehicle (7) on the image data displayed on the image display unit (4) if a steering angle of the vehicle (7) has a predetermined amount, **characterized in that**
the vehicle (7) comprises a tractor (11) and a trailer (12) pivotable to the tractor (11), and the calculation unit (3) is adapted for precalculating at least a first trajectory (10) of the tractor (11) and at least a second trajectory (10') of the trailer (12) for future driving course of the tractor (11) and the trailer (12), wherein the image displayed on the image display unit relates to side and rear areas and shows a first trajectory for the tractor and a second trajectory for the trailer.

2. The visual system according to claim 1, wherein the calculation unit (3) is adapted to calculate the at least one trajectory (10, 10') by means of at least one vehicle-related input.

3. The visual system according to claim 2, wherein the at least one vehicle-related input is processed in a mathematical model.

4. The visual system according to claim 3, wherein the mathematical model comprises at least two inputs.

5. The visual system according to claim 4, wherein the at least two inputs are selected from among a steering angle, driving speed, driving direction, yaw rate and/or ABS wheel signals of a steering axis of the vehicle (7).

6. The visual system according to one of claims 1 to 5, wherein the field of view (8) captured by the capturing unit (2) extends, at least partly, laterally next to the vehicle (7) and beyond a length of the vehicle (7).

7. The visual system according to one of claims 1 to 6, wherein the at least one trajectory (10, 10') can be superimposed on the field of view (8) captured by the capturing unit (2).

8. The visual system according to any one of claims 1 to 7, wherein the at least one first trajectory (10) and/or the at least one second trajectory (10') are superimposed on the image data displayed on the image display unit, when the steering angle of the tractor unit (11) has the predetermined amount.

9. The visual system according to any one of claims 1 to 8, wherein the mathematical model provides an angle formed between the tractor unit (11) and the trailer (12) as an output.

10. The visual system according to any one of the preceding claims, wherein at least one predefined point on the vehicle (7) is used as a reference point for displaying the trajectory (10, 10').

11. The visual system according to claim 10, wherein the at least one predefined point is provided on the rear axis (15) of the vehicle (7) and the rear axis (15) of the tractor (11), respectively, and/or on the rear axis (15) of the trailer (12).

## Revendications

1. Système de vision (1) pour un véhicule (7) avec
une unité d'enregistrement (2) pour l'enregistrement d'une zone de vision (8) ;
une unité de calcul (3) qui est adaptée pour générer des données d'image à représenter à partir des données d'image enregistrées et pour les livrer à une unité de rendu d'image (4), dans lequel les données d'image à représenter contiennent la zone de vision (8) enregistrée par l'unité d'enregistrement (2),
l'unité de rendu d'image (4) est adaptée pour la représentation visible pour le conducteur du véhicule (7) des données d'image à représenter, et
l'unité de calcul (3) est adaptée pour superposer au moins une trajectoire (10, 10') sur une course future du véhicule (7) dans les données d'image à représenter affichées sur l'unité de rendu d'image (4), lorsqu'un angle de direction du véhicule (7) présente une valeur prédéterminée, **caractérisé en ce que**
le véhicule (7) présente une machine de traction (11) et une remorque (12) pouvant pivoter par rapport à la machine de traction (11), et l'unité de calcul (3) est adaptée pour le calcul préalable d'au moins une première trajectoire (10) de la machine de traction (11) et d'au moins une seconde trajectoire (10') de la remorque (12) pour une course future de la machine de traction (11) et la remorque (12), dans lequel l'image affichée sur l'unité de rendu d'image concerne une zone latérale et arrière et affiche une première trajectoire pour la machine de traction et une seconde trajectoire pour la remorque.

2. Système de vision selon la revendication 1, pour lequel l'unité de calcul (3) est adaptée pour calculer au moyen d'au moins une grandeur d'entrée relative au véhicule l'au moins une trajectoire (10, 10').

3. Système de vision selon la revendication 2, pour lequel l'au moins une grandeur d'entrée relative au véhicule est traitée dans un modèle mathématique.

4. Système de vision selon la revendication 3, pour lequel le modèle mathématique présente au moins deux grandeurs d'entrée

5. Système de vision selon la revendication 4, pour lequel les au moins deux grandeurs d'entrée sont sélectionnées parmi l'angle de direction, la vitesse de déplacement, le sens de déplacement, le taux de lacet et/ou les signaux de roue ABS d'un essieu de direction du véhicule (7).

6. Système de vision selon l'une des revendications 1 à 5, pour lequel la zone de vision (8) enregistrée par l'unité d'enregistrement (2) se trouve au moins partiellement latéralement à côté du véhicule (7) et s'étend au-delà d'une longueur du véhicule (7).

7. Système de vision selon la revendication 6, pour lequel l'au moins une trajectoire (10, 10') peut être superposée dans la zone de vision (8) enregistrée par l'unité d'enregistrement (2).

8. Système de vision selon l'une des revendications 1 à 7, pour lequel l'au moins une première trajectoire (10) et/ou l'au moins une seconde trajectoire (10') sont superposées dans les données d'image à représenter affichées sur l'unité de rendu d'image (4) lorsque l'angle de direction de la machine de traction (11) présente la valeur prédéterminée.

9. Système de vision selon l'une des revendications 1 à 8, pour lequel le modèle mathématique met à disposition comme grandeur de sortie un angle de pliage formé entre la machine de traction (11) et la remorque (12).

10. Système de vision selon l'une des revendications précédentes, pour lequel pour la représentation de la trajectoire (10, 10') au moins un point défini précédemment est utilisé au niveau du véhicule (7) comme point de référence.

11. Système de vision selon la revendication 10, pour lequel l'au moins un point prédéfini est prévu sur l'essieu arrière (15) du véhicule (7) ou sur l'essieu arrière (15) de la machine de traction (11) et/ou sur l'essieu arrière (15) de la remorque (12).
